Europäisches Patentamt

European Patent Office

Office européen des brevets

(11) Publication number : **0 469 816 A2**

# (12) EUROPEAN PATENT APPLICATION

(21) Application number : **91306906.8**

(22) Date of filing : **29.07.91**

(51) Int. Cl.⁵ : **B60C 11/11, B60C 11/04**

(30) Priority : **31.07.90 JP 201120/90**

(43) Date of publication of application :
**05.02.92 Bulletin 92/06**

(84) Designated Contracting States :
**CH DE FR GB LI SE**

(71) Applicant : **Bridgestone Corporation**
**10-1, Kyobashi 1-Chome Chuo-Ku**
**Tokyo 104 (JP)**

(72) Inventor : **Ikeda, Hiromichi**
**22-14, Hamadayama 1-Chome**
**Suginami-Ku, Tokyo (JP)**
Inventor : **Ichiki, Yasufumi**
**5-5, Ogawahigashi-Cho 3-Chome**
**Kodaira City, Tokyo (JP)**

(74) Representative : **Whalley, Kevin et al**
**MARKS & CLERK 57/60 Lincoln's Inn Fields**
**London WC2A 3LS (GB)**

(54) **Blocks for pneumatic tires and pneumatic tires employing such blocks in treads.**

(57)   A block (1) for a pneumatic tire has a substantially rectangular contour as a whole, a ratio of the width (W) of the block to that of a tread in a range of 0.10 to 0.30, and a ratio of the length (L) of the block to the width of the tread in a range of 0.075 to 0.250. At least a wall (2) of the block on a stepping-in side is inclined in a range of 10° to 45° relative to a meridian line (Y-Y) of the tire. The surface of the block is provided with a single sipe (4) opening at widthwise opposite side edges of the block. The widthwise projected length b of that portion of the sipe which is located on the stepping-in side while not overlapping the other portion is set at not more than 0.35 $\underline{a}$ in which $\underline{a}$ is the entire length of the sipe projected in the width direction of the tread.

## FIG. 2a

This invention relates to blocks for pneumatic tires, which exhibit excellent performances on ice and snow when applied to, for example, heavy duty pneumatic tires. More particularly, the invention relates to blocks for pneumatic tires, which exhibit excellent motion performances particularly on frozen roads having relatively high temperatures, and prevent occurrence of cracks in bottoms of sipes.

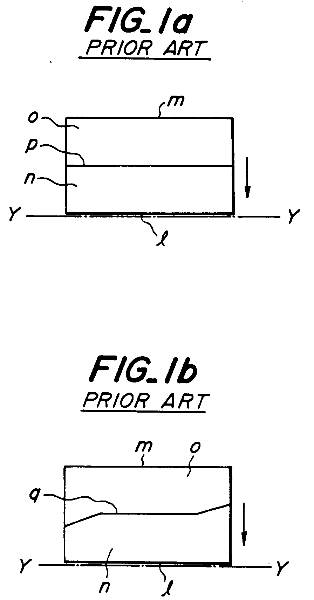

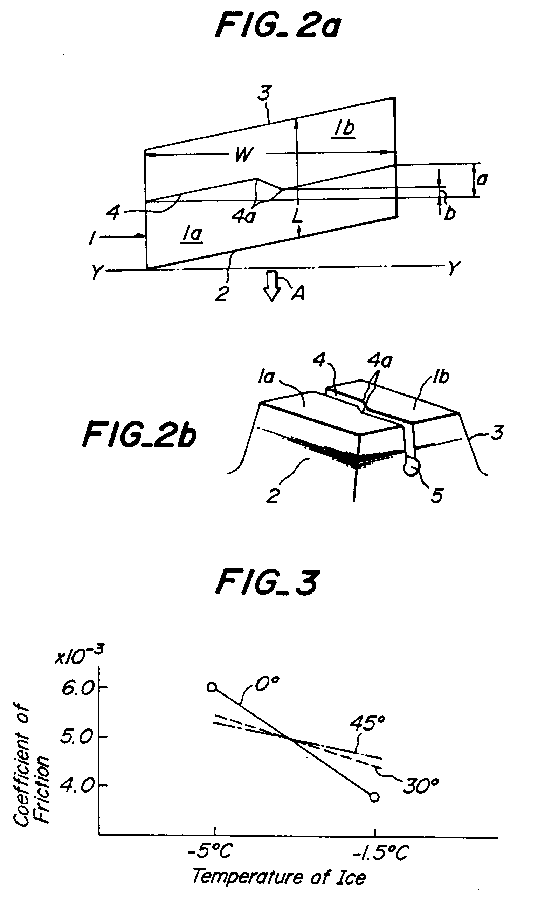

Blocks having almost rectangular profiles are formerly arranged on treading surfaces of treads of pneumatic tires. For example, as shown in Figs. 1a and 1b, walls $\ell$ and m of a block on a stepping-in side and a kicking-out side, respectively, are extended in parallel to a meridian line Y-Y of a tire, and the surface of the block is provided, as shown in Fig. 1a, with a single sipe p which extends substantially in parallel to the block walls $\ell$, m and opens at opposite sides of the block to divide this block into substantially two equal sections, i.e., a stepping-in side portion "n" and a kicking-out side portion "o". In Fig. 1b, the block is provided with a sipe "q" having those portions which are located near side edges of the block are bent obliquely in stepping-in and kicking-out directions of the block, respectively, and thereby the block is divided into substantially two equal sections, i.e., a stepping-in side portion "n" and a kicking-out portion "o". In these blocks, the block walls $\ell$ and m extend in a direction orthogonal to a rotating direction of the tire, in other words, in the tire-meridian direction, and a most part of the sipe p, q extends in a direction orthogonal to the rotating direction of the tire. Accordingly, great frictional forces are produced relative to ice and snow roads, so that excellent traction and braking performances can be obtained on such ice and show roads.

However, the present inventors have clarified through results in tests on ice that when the walls of the blocks were extended in tire-meridian directions as in the prior art, the coefficient of friction on ice of the blocks increased with decrease in temperature of ice, whereas when the temperature of ice rose to such a temperature at which melted ice water collected on ice, the tire could not smoothly or fully drain water so that no necessary coefficient of friction on ice could not be ensured.

This can be almost similarly applied to the sipe formed in the block. When the sipe extends in parallel to the meridian line of the tire, the coefficient of friction on ice is remarkably lowered due to rise in the temperature of ice.

The present invention has been accomplished noting such problems of the prior art, and is to provide blocks for pneumatic tires, and is to provide blocks for pneumatic tires, which blocks can not only afford necessary and sufficient coefficient of friction on ice at low temperatures, but also afford sufficiently assure a necessary coefficient of friction on ice with respect to frozen roads at such relatively high temperatures at which melted ice water collects, while extremely effectively preventing fracture of the blocks due to sipes formed therein. The invention is also to provide pneumatic tires employing such blocks in treads thereof.

The block for the pneumatic tire according to the present invention has a substantially rectangular contour as a whole, a ratio of the width of the block to that of a tread in a range of 0.10 to 0.30, and a ratio of the length of the block to the width of the tread in a range of 0.075 to 0.250, wherein at least a wall of the block on a stepping-in side is inclined in a range of 10° to 45° relative to a meridian line of the tire, the surface of the block is provided with a single sipe opening at widthwise opposite side edges of the block, and a widthwise projected length "b" of that portion of the sipe which is located on the stepping-in side while not overlapping the remaining portion, is set at not more than 0.35"a" in which "a" is an entire length of the sipe projected in a width direction of the tread.

The width of the block means a length of the block measured in the width direction of the tread, and the length of the block means that of the block measured in the circumferential direction of the block.

In the tire block according to the present invention, the ratio of the width of the block to that of the tread is set in a range of 0.10 to 0.30, and the ratio of the length of the block to the width of the tread is set in a range of 0.075 to 0.250. By so setting, not only the braking performance in the advancing direction and side slipping resistance can be ensured on ice and snow, but also sufficient durability of the blocks can be fully ensured.

That is, if the above ratios are short of their set ranges, rigidity of each of the blocks becomes too low, and durability of the blocks themselves becomes insufficient. On the other hand, if the ratios exceeds their respective ranges, the braking performance in the advancing direction on ice and snow and sideslipping resistance lower.

Further, since at least the wall of the block on the stepping-in side is inclined at an angle of 10° to 45° relative to a meridian line of the tire, a high coefficient of friction can be obtained against ice having temperatures not less than -3°C. In other words, if the inclined angle is less than 10°, drainability is deteriorated. On the other hand, if the angle is more than 45°, a tread-width component of the block wall having a given length is. In these cases, no high coefficient of friction can be obtained.

In order to suppress change in rigidity of the blocks to the utmost and also make the sipes exhibit edging effects as in the walls of blocks, it is a common practice to form the sipes in the blocks such that the sipes are inclined to make greater that component which extends in an extending direction of the walls of the block on the stepping-in and kicking-out sides as compared with the remaining component. Therefore, when the walls of the blocks on the stepping-in side and on the kicking-out side are inclined in an angle range of 10° to 45° relative to the meridian line of the tire as mentioned above, the sipe is ordinarily formed along these walls of the block such that the sipe is inclined to make greater that component which extends in the extending direction of these walls as compared with the remaining component. As a matter of course, the prior art has paid not only no attention to what percentage of the entire projected length of the thus formed sipe as viewed in the circumferential direction of the tread that portion of the sipe which is projected without overlapping the remaining portion occupies, but also the prior art has paid no attention to whether such a projected portion exists or not.

Therefore, with respect to the conventional sipe formed putting importance upon the appearance, stresses concentrate on that portion of the sipe which first reaches the road, in other words, that portion on the stepping-in side, and cracks are developed there so that the blocks are likely to be broken at a relatively early stage.

Under the circumstances, according to the present invention, in order to fully maintain the essential function of the sipe itself and effectively prevent the concentration of stresses upon the bottom of the sipe on the stepping-in side of the sipe, a plurality of portions of a single sipe are simultaneously brought into contact with the road. More specifically, plural, preferably two, bent portions are formed in one sipe inclined to the meridian line so that the rate of that portion of the sipe which is located on the stepping-in side of the block and projected while not overlapping with the other portion is set at not more than 0.35"a" in which "a" is the entire projection length of the sipe as measured in the circumferential direction of the tread.

That is, if the ratio is more than 0.35"a", cracks having a length of not less than 1 mm occur in the bottom of the sipe at a relatively early stage.

The number of the bent portions of the sipe may of course three or more. The greater the number of the bent portions, the lower the draining function of the sipe. Therefore, the number of the bent portions is preferably two which is the minimum value capable of attaining the above-mentioned rate. The reason why a single sipe is formed in a single block is to ensure a sufficient coefficient of friction on ice together with prevention of reduction in rigidity of the block in correlation to the width and the length of the block as mentioned above.

As mentioned above, according to the block of the present invention, the inclination angle of at least the wall of the block on the stepping-in side relative to the meridian line is specified in a specific range, and the sipe is formed in the block such that that component of the sipe which extends in parallel to this wall of the block is greater than the remaining component. By so constructing, the high coefficient of friction on ice can be ensured together with excellent draining performance on frozen roads having relatively high temperatures. Further, when that portion of of the sipe which is projected in the width direction of the tread while overlapping the projected length of the remaining portion of the sipe is included as much as possible, fracture of the block resulting from occurrence of cracks in the bottom of the sipe can be extremely effectively prevented.

These and other objects, features and advantages of the invention will be apparent upon reading of the following description of the invention when taken in conjunction of the attached drawings, with the understanding that some modifications, variations and changes of the same could be made by the skilled person in the art to which the invention pertains without departing from the spirit of the invention or the scope of claims appended hereto

For a better understanding of the invention, reference is made to the attached drawings, wherein:

Figs. 1a and 1b are plane views showing the conventional blocks;

Figs. 2a and 2b are a plan view and a perspective view of one embodiment of the present invention, respectively;

Fig. 3 is a graph showing the relationship between the inclination angle of the block wall and the coefficient of friction with respect to the temperature of ice;

Fig. 4 is a graph showing the relationship between the coefficient of friction on ice and the inclined angle of the block wall;

Fig. 5 is a view illustrating occurrence of cracks in the bottom of a sipe;

Fig. 6 is a graph showing the relationship between the length of that portion of the sipe on a stepping-in side which is projected in a width direction without being overlapped with the remaining portion of the sipe; and

Fig. 7 is a view illustrating a tread pattern to which the blocks according to the present invention are applied.

Embodiments of the present invention will be explained based on the attached drawings:

Fig. 2a is a view illustrating an embodiment of the present invention, in which an arrow A shows a moving direction of the block, i.e., a rotating direction of a tire.

Such blocks 1 are arranged on a treading portion of a tread of the pneumatic tire, preferably, in three or more rows, and each of them has a substantially rectangular shape (a parallelogram in Fig. 2a). In the block 1, ratios of the width W of the block measured in a width direction of the tread and the length L of the block measured in a circumferential direction of the tread are set at ranges of 0.10-0.30 and 0.075-0.250, respectively, relative to the width of the tread. By so constructing, as mentioned above, braking performance in an advancing direction as well as sideslipping resistance can be ensured on ice and snow, and durability of each block can be fully assured.

Further, according to the present invention, at least a wall 2 of the block 1 on the stepping-in side is inclined at an angle of 10°-45° relative to a meridian line Y-Y of the tire. In Fig. 2a, a wall 3 of the block on the kicking-out side is also inclined at an angle of 10°-45° relative to the meridian line Y-Y. By so doing, a high coefficient of friction on ice having such temperatures at which melted ice water collects.

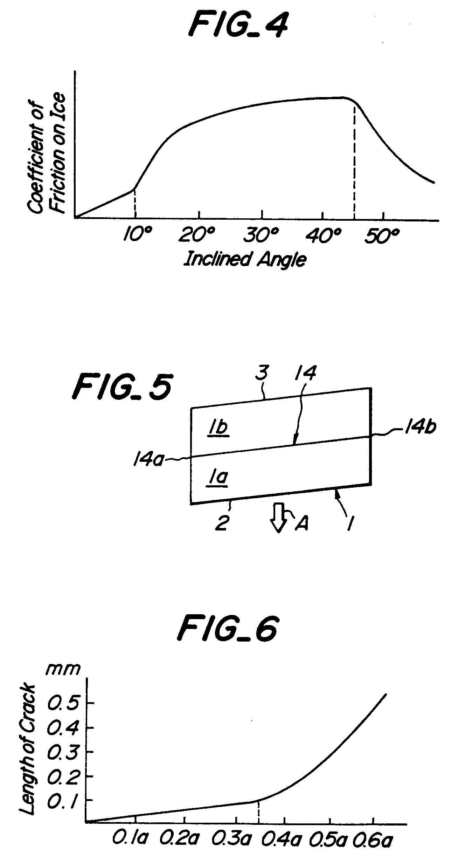

That is, with respect to frozen roads free from melted ice water, those walls of a block which have no inclination relative to the meridian line of the tire naturally have the highest coefficient of friction. However, such blocks have poor drainability on ice having relatively high temperatures at which melted ice water is produced. Therefore, as shown by a solid line in Fig. 3, the coefficient of friction gradually decreases with increase in the temperature of ice, in other words, with increase in an amount of melted ice water, so that the coefficient of friction finally reaches a practically unacceptable range. To the contrary, as shown in Fig. 3 by a broken line and a one dot-chain line, when the inclined angle of the block wall relative to the meridian line is set at 30° or 45°, drainability of the block wall is improved, so that reduction in the coefficient of friction owing to increase in temperature of ice can be greatly suppressed as compared with the case represented by the solid line in Fig. 3. In addition, according to the present invention, a sufficiently practically acceptable coefficient of friction can be also attained on ice having such low temperatures as to produce no melted ice water.

The reason why the wall 2 of the block is inclined in a range of 10° to 45° relative to the meridian line Y-Y of the tire is as follows:

Fig. 4 shows the coefficient of friction of the block in the state that the temperature of ice was -2.0°C, and melted ice water collected on ice. If the inclined angle is less than 10°, the coefficient of friction decreases owing to poor melted ice water-drainability of the block wall 2. To the contrary, if it is more than 45°, the drainability increases, but that edge component of the block wall having a given length which extends in the width direction of the tread becomes smaller, so that the coefficient of friction rapidly decreases.

In the block 1 in which the extending direction of the walls 2 and 3 of the block are determined as mentioned above, a sipe 4 is formed on the surface of the block 1, which sipe opens to opposite sides of the block 1, and extends in parallel to the walls 2 and 3 of the block such that that portion of the sipe which extends in parallel with the walls 2 and 3 of the block is longer than the remainng portion, while the sipe 4 equally divides the block 1 into a stepping-in portion 1a and a kicking-out portion 1b. By so constructing, since the sipe 4 extends in the block such that that portion of the sipe which extends in parallel with the walls 2 and 3 is longer than the remaining portion, the edges of that portion of the sipe can also contribute to increase in the coefficient of friction as in the case of the edges of the block. Moreover, since the sipe 4 divides the block 1 into almost two equal portions, circumferential change in rigidity of each of the divided portions of the block can be effectively prevented, so that uneven wearing of the block and cracking of the bottom of the sipe can be prevented.

On the other hand, if a sipe 14 is linearly formed in a central portion between walls 2 and 3 of the block and in parallel to these walls, for example, as shown in Fig. 5, the sipe 14 gradually reaches the ground starting from its end 14a on the stepping-in side to its end 14b on the kicking-out side. Thus, great stress is shared by the end portion 14a on the stepping-in side at which the sipe first reaches the road as well as by its vicinity, so that the sipe 14 is greatly opened. Consequently, stress concentrates in the bottom of the sipe, so that cracks occur in the bottom of the sipe in a relatively early stage, many of them being developed in the kicking-out direction of the block. With progress of cracking, the block suffers local cut-off or the like.

In the illustrated embodiment of Fig. 2a, the sipe 4 is bent at two bent portions 4a located in a central portion as viewed in the width direction of the block so that such cracking of the bottom of the sipe may be prevented. In this embodiment, the length "b" of that portion of the sipe 4 which is projected on the stepping-in side of the block 1 without being overlapped with the remaining portion is set at not more than 0.35 "a" in which "a" is the entire length of the sipe 4 projected in the width direction of the tread.

Fig. 6 shows the occurring state of cracks in the bottom of the sipe after a 10 ton truck equipped with a tire having a tread with such sipes in blocks was run at 80 km/h on highway road over 10,000 km under a rated load and a rated internal pressure. As shown in Fig. 6, the length of cracks occurred in the bottom of the sipe on the stepping-in side of the sipe 4 and in its vicinity could be suppressed to not more than 0.1 mm, which causes no practical problem. On the other hand, if the projected length "b" exceeds 0.35 "a", the length of the cracks rapidly increased to cause troubles of the block.

As mentioned above, according to the block of the present invention, excellent traction performance and braking performance can be obtained particularly on frozen roads having such relatively high temperatures that melted ice water may collect on ice. Moreover, occurrence of cracks in the bottom of the sipe can be extremely effectively prevented.

Fig. 2b shows a perspective view of Fig. 2a. When the cross sectional shape of the sipe is designed to have a curved enlarged portion 5 near the bottom of the sipe as shown in Fig. 2b, occurrence of cracks in the bottom of the sipe can be more effectively prevented. As a matter of course, the block 1 in Fig. 2a may have straight walls extended down to the bottom.

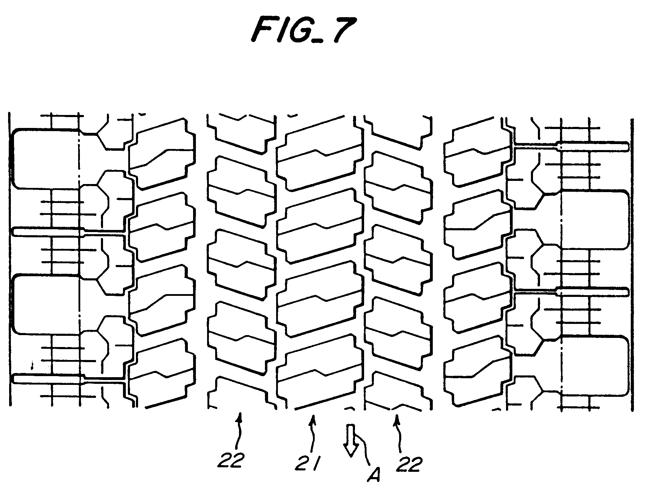

Fig. 7 is a developed view of a tread pattern having an aspect ratio of 100% and a negative ratio of 34%, to which the present invention is applied. In this tread pattern, the blocks according to the present invention are employed for a row 21 of center blocks and a row 22 of second blocks adjacent thereto.

In this embodiment, each of the blocks in these rows 21 and 22 has such a shape that corner portions of a rectangular shape are cut in a L-shaped form in relation to circumferential grooves. The shape of the blocks according to the present invention may include such a form and other similar shapes.

It was confirmed that this tire exhibited very excellent traction performance and braking performance on ice and snow roads in a 10 ton truck after running under the rated load and the rated internal pressure. In addition, it was confirmed that when the length "b" of that portion of the sipe which is projected on the stepping-in side of the block without being overlapped with the remaining portion of the sipe is set at not more than 0.2 "a" in which "a" is the entire projected length of the sipe in the circumferential direction, cracks occurred in the bottom of the sipe on the stepping-in side of the sipe after running on dry paved roads over 10,000 km was not more than 0.1 mm. Thus, it was confirmed that those cracks was too slight to cause a practical problem.

As clear from the above-mentioned explanation, according to the present invention, high coefficient of friction can be attained not only on frozen roads having low temperature but also on frozen roads having relatively high temperatures, so that excellent traction performance and braking performance can be obtained.

## Claims

1. A block (1) for a pneumatic tire has a substantially rectangular contour as a whole, a ratio of the width (W) of the block to that of a tread in a range of 0.10 to 0.30, and a ratio of the length (L) of the block to the width of the tread in a range of 0.075 to 0.250, wherein at least a wall (2) of the block on a stepping-in side is inclined in a range of 10° to 45° relative to a meridian line (Y-Y) of the tire, wherein the surface of the block is provided with a single sipe (4) opening at widthwise opposite side edges of the block, and wherein a widthwise projected length $\underline{b}$ of that portion of the sipe which is located on the stepping-in side while not overlapping the remaining portion is set at not more than 0.35 $\underline{a}$ in which $\underline{a}$ is the entire length of the sipe projected in the width direction of the tread.

2. A block as claimed in claim 1, characterized in that the sipe (4) is bent at two locations (4a).

3. A block as claimed in claim 1 or 2, characterized in that the sipe (4) has a curved enlarged portion (5) near the bottom thereof as viewed sectionally.

4. A tire tread provided with blocks as claimed in any of claims 1 to 3.

5. A pneumatic tire having a tread provided with blocks as claimed in any of claims 1 to 3.

# FIG_la
## PRIOR ART

# FIG_lb
## PRIOR ART

# FIG_2a

# FIG_2b

# FIG_3

# FIG_4

# FIG_5

# FIG_6

## FIG_7